(19) Europäisches Patentamt / European Patent Office / Office européen des brevets

(11) **EP 2 235 590 B1**

(12) **EUROPÄISCHE PATENTSCHRIFT**

(45) Veröffentlichungstag und Bekanntmachung des Hinweises auf die Patenterteilung:
**11.07.2018 Patentblatt 2018/28**

(51) Int Cl.:
***G02F 1/37*** *(2006.01)*

(21) Anmeldenummer: **08866308.3**

(22) Anmeldetag: **23.12.2008**

(86) Internationale Anmeldenummer:
**PCT/EP2008/068218**

(87) Internationale Veröffentlichungsnummer:
**WO 2009/083550 (09.07.2009 Gazette 2009/28)**

(54) **VORRICHTUNG ZUR FREQUENZVERDOPPLUNG VON LASERSTRAHLUNG**

DEVICE FOR DOUBLING THE FREQUENCY OF LASER RADIATION

DISPOSITIF POUR DOUBLER LA FRÉQUENCE D'UN RAYONNEMENT LASER

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.12.2007 DE 102007063492**

(43) Veröffentlichungstag der Anmeldung:
**06.10.2010 Patentblatt 2010/40**

(73) Patentinhaber: **Forschungsverbund Berlin E.V.**
**12489 Berlin (DE)**

(72) Erfinder:
• **GÜTHER, Reiner**
  **12437 Berlin (DE)**
• **BLUME, Gunnar**
  **12524 Berlin (DE)**
• **EPPICH, Bernd**
  **10997 Berlin (DE)**
• **FIEBIG, Christian**
  **10249 Berlin (DE)**
• **PASCHKE, Katrin**
  **14552 Michendorf (DE)**
• **UEBERNICKEL, Mirko**
  **12435 Berlin (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
• MAIWALD M ET AL: "600 mW optical output power at 488 nm by use of a high-power hybrid laser diode system and a periodically poled MgO:LiNbO3 bulk crystal" Optics Letters Opt. Soc. America USA, Bd. 31, Nr. 6, 15. März 2006 (2006-03-15), Seiten 802-804, XP002526435 ISSN: 0146-9592
• JECHOW A ET AL: "Highly efficient single-pass frequency doubling of a continuous-wave distributed feedback laser diode using a PPLN waveguide crystal at 488 nm" OPTICS LETTERS 20071015 OPTICAL SOCIETY OF AMERICA US, Bd. 32, Nr. 20, 15. Oktober 2007 (2007-10-15), Seiten 3035-3037, XP002526436
• CUTOLO A ET AL: "Improvements to the diagnostics of beam quality in cw and pulsed laser systems" OPTICS COMMUNICATIONS, NORTH-HOLLAND PUBLISHING CO. AMSTERDAM, NL, Bd. 89, Nr. 2-4, 1. Mai 1992 (1992-05-01), Seiten 223-228, XP025490401 ISSN: 0030-4018 [gefunden am 1992-05-01]
• BOYD G D ET AL: "Parametric interaction of focused gaussian light beams" JOURNAL OF APPLIED PHYSICS, AMERICAN INSTITUTE OF PHYSICS. NEW YORK, US, Bd. 39, Nr. 8, 1. Juli 1968 (1968-07-01), Seiten 3597-3639, XP002314951 ISSN: 0021-8979
• WENZEL H ET AL: "10 W continuous-wave monolithically integrated master-oscillator power-amplifier" ELECTRONICS LETTERS, IEE STEVENAGE, GB, Bd. 43, Nr. 3, 1. Februar 2007 (2007-02-01), Seiten 160-162, XP006028158 ISSN: 0013-5194 in der Anmeldung erwähnt

- BLUME G ET AL: "Rayleigh length dependent SHG conversion at 488nm using a monolithic DBR tapered diode laser" PROCEEDINGS OF SPIE - THE INTERNATIONAL SOCIETY FOR OPTICAL ENGINEERING - NONLINEAR FREQUENCY GENERATION AND CONVERSION: MATERIALS, DEVICES, AND APPLICATIONS VII 2008 SPIE US, Bd. 6875, 22. Januar 2008 (2008-01-22), XP002526437

**Beschreibung**

Die vorliegende Erfindung betrifft eine Vorrichtung zur Frequenzverdopplung von Laserstrahlung.

Stand der Technik

Mit Hilfe nichtlinear optischer Medien ist es möglich, Laserstrahlung mit niedrigerer Frequenz, also größerer Wellenlänge, in Strahlung mit höherer Frequenz, also kleinerer Wellenlänge, zu transformieren. Speziell wird bei der Erzeugung der zweiten Harmonischen aus der Strahlung einer sogenannten Grundwelle eine Strahlung hergestellt, deren Wellenlänge die Hälfte der Wellenlänge der Grundwelle beträgt.

Da zumeist kurzwellige Laserstrahlung schwieriger als langwellige Laserstrahlung zu erzeugen ist, ist die Erzeugung der zweiten Harmonischen von Vorteil, um einen Teil der höheren Leistungen langwelliger Laser in den kurzwelligen Bereich übertragen zu können.

Meist werden zur Erzeugung der zweiten Harmonischen Festkörper-Laser verwendet, die einen idealen oder nahezu idealen Gauß-Strahl emittieren, der auch durch den Stahlgütefaktor $M^2 = 1$ (bzw. $M^2 \approx 1$) gekennzeichnet wird. Die optimalen technischen Bedingungen für die Erzeugung der zweiten Harmonischen sind unter anderem in W.P. Risk, T.R. Gosnell, A.V. Nurmikko, "Compact Blue-Green Lasers", Cambridge University Press, 2003; Bergmann Schaefer "Lehrbuch der Experimentalphysik", Band 3, "Optik" und H. Weber "Nichtlineare Optik", S. 899-998; Berlin, Walter de Gruyter, 2007 beschrieben.

Taperlaser sind Hochleistungs-Diodenlaser mit einem in der Lateralebene (Ebene des Wellenleiters mit aktiver Schicht) getaperten (d.h. nach außen divergent verlaufenden) Bereich. Die emittierte Strahlung von Taperlasern ist daher durch unterschiedliche laterale und vertikale (senkrecht zur Lateralebene) Divergenz gekennzeichnet, wobei besonders für höhere Leistungen der Strahlgütefaktor $M^2$ (nachfolgend auch als Strahlparameterprodukt, Strahlgüte bzw. Strahlgüteparameter bezeichnet) in beiden Ebenen größer als 1 sein kann. Zumeist weist die Strahlgüte $M^2$ in vertikaler Richtung einen Wert näher an 1 auf, als in lateraler Richtung.

Für Taperlaser (auch "tapered laser") werden anamorphotische Optiken (d.h. solche, die auch Zylinderlinsen/ Zylinderspiegel enthalten) und die Möglichkeiten der Erfüllung der in der obengenannten Literatur angegebenen Boyd-Kleinman-Optimierung für kohärente konvergierende Laserstrahlung mit elliptischem Querschnitt in R. Güther, DGaO-Proceedings, P44 (2005) diskutiert.

Die optimalen Bedingungen für die Fokussierung des Laserstrahls in das zur Frequenzumsetzung verwendete Medium werden so angegeben, dass die Ausbreitungslänge der Grundwelle durch das nichtlineare Medium das 5.6-Fache der Rayleigh-Entfernung dieser Grundwelle, also die Entfernung zwischen Strahltaille und der Strahlaufweitung auf das $\sqrt{2}$ -Fache des Taillenradius, beträgt Insbesondere bei Halbleiter-Laserdioden sind im roten oder infraroten Spektralbereich höhere Leistungen auch im stationären Laserbetrieb verfügbar, wie dies in der Veröffentlichung H. Wenzel et al. in Electronics Letters, vol. 43, No. 3 S. 160-161 (2007) für einen Taper-Laser mit der Leistung von 10 W, der Wellenlänge 977 nm und einem Strahlparameterprodukt von $M^2 = 2$ oder auch in K. Paschke, et al. in Proceedings SPIE vol. 6184, 1-7 (2006) gezeigt wird.

Es ist eine Reihe von Veröffentlichungen bekannt, die sich auf die Erzeugung der zweiten Harmonischen einer partiell kohärenten Grundwelle beziehen: In G.P. Agrawal, Phys. Rev. A 23, 1863-1868 (1981) wird ein für die zweite Harmonische mathematischer nichtlinearer Ausbreitungskern angegeben, aber die partielle Kohärenz ist nur für eine ebene Grundwelle eingeführt, also nicht für eine konvergente Grundwelle, die für die reale Frequenzumsetzung erforderlich ist.

In N.A. Ansari, M.S. Zubairy, 59 (5,6), 385-390 (1986) und in Z. Zahid, M.S. Zubairy, Opt. Commun. 76 (1) 1-7 (1990) wird eine rotationssymmetrische partiell kohärente Grundwelle vorausgesetzt, jedoch verhindert ein Schreibfehler in den Ergebnisformeln eine technisch relevante Auswertung. Weiterhin ist ein elliptischer Intensitätsquerschnitt und ein elliptisches Kohärenzintervall in den Ebenen senkrecht zur Ausbreitungsrichtung durch die genannte Theorie nicht berücksichtigt, die gerade für übliche kantenemittierende Halbleiterlaser, insbesondere Taperlaser, charakteristisch und erforderlich sind.

Schließlich gibt Y. Cai, U. Peschel, Opt. Express, 15 (23), 15480-15492 (2007) eine formale Abfolge von mathematischen Schritten für ein allgemeineres Kohärenzverhalten an, die für eine technische Lehre erst noch zu lösen sind, um zu technisch verwertbaren Bemessungsanweisungen zu kommen. Außerdem fehlt hierbei die Einbeziehung einer geringen Phasenfehlanpassung zwischen Grundwelle und zweiter Harmonischer, die zum Erreichen des Optimums ebenfalls betrachtet werden muss, wie das in der kohärent optischen Boyd-Kleinman-Theorie gezeigt wird. Zwei Auswertungen in dieser Veröffentlichung beziehen sich auf den hier nicht anwendbaren rotationssymmetrischen Fall.

Maiwald et al. "600 mW optical output power at 488 nm by use of a high-power hybrid laser diode system and a periodically poled MgO:LiNbO3 bulk crystal", Optical Letters Opt. Soc. America USA, Bd. 31, Nr. 6, Seiten 802-804 sowie Jechow et al. "Highly efficient single-pass frequency doubling of a continuous-wave distributed feedback laser diode usinq PPLN wavequide crystal at 488 nm", Optical Letters Opt. Soc. America USA, Bd. 32, Nr. 20, Seiten 3035-3037 beschreiben eine Frequenzkonversion für Laserdioden. Die Präambel von Anspruch 1 basiert auf der Veröffentlichung von Maiwald et al.. Cutolo et al. "Improvements in the diagnostics of beam quality in cw and pulsed laser systems", Optics Communications, North-Holland Publishing Co., Amsterdam, NL, Bd. 89, Nr. 2-4, S. 223-228 untersucht die Diagnoseeffizienz der Strahlqualität von cw- und gepulsten Lasersystemen.

Damit existiert keine technisch umsetzbare Bemessungsvorschrift, wie im Falle des Vorliegens einer nichtrotationssymmetrischen (unterschiedliche vertikale und laterale Divergenz) Laserstrahlung mit im Allgemeinen unterschiedlichen Strahlgüteparametern in Lateral- und Vertikalrichtung mit Werten größer als 1 zu verfahren ist.

Ein Strahlgüteparameter $M^2 > 1$ von emittierter Laserstrahlung kann durch mangelnde Korrelation der elektrischen Feldstärke quer zur Ausbreitungsrichtung verursacht sein, dass also eine Korrelation nur über endliche Bereiche quer zur Ausbreitungsrichtung wirksam ist, die in ihrer Abmessung beispielsweise kleiner als der Intensitätsverlauf der Strahlung sind. Eine andere Ursache kann das Vorliegen von Amplituden- und Phasenfehlern sein, indem die Amplituden- und Phasenverläufe von dem des Gauß'schen Grundmode der Laserstrahlung abweichen. Sowohl die obengenannten endlichen Korrelationsreichweiten als auch die obengenannten Amplituden- und Phasenfehler und auch ihre Kombination führen generell zu $M^2 > 1$.

Die in der oben angegebenen Literatur R. Güther, DGaO-Proceedings angegebenen Optimierungen beziehen sich auf Lichtquellen mit Emission des Gauß'schen Grundmode, also auf $M^2 = 1$ in der Lateral- und auch in der Vertikal-Ebene, allerdings mit allgemein elliptischem Strahlungsquerschnitt unter Einbeziehung von Astigmatismus, also auf den Fall von Korrelationsreichweiten des elektrischen Feldes, die groß gegenüber dem Intensitätsquerschnitt der Strahlung sind, und auf zum Grundmode gehörende entsprechende Amplituden- und Phasenverläufe.

Die Aufgabe der Erfindung besteht demnach darin, eine Vorrichtung zur Frequenzverdopplung von nicht rotationssymmetrischer Strahlung eines Diodenlasers (vorzugsweise Taperlaser im cw-Laserbetrieb) mit im Allgemeinen unterschiedlichem $M^2 > 1$ in Lateral oder/und Vertikal-Richtung anzugeben, die eine optimale Umwandlungseffizienz bzw. eine höhere Umwandlungseffizienz als die Vorrichtungen nach dem Stand der Technik aufweist.

Diese Aufgabe wird durch die Merkmale des Patentanspruchs 1 gelöst. Bevorzugte Ausgestaltungen sind in den Unteransprüchen enthalten.

Es wurde gefunden, dass für die Fokussierung von Grundwellenstrahlung entsprechend der Boyd-Kleinman-Theorie das Optimum der Frequenzumsetzung im Falle $M^2 > 1$ verfehlt wird, und zwar umso mehr, je größer $M^2$ ist.

Weiterhin wurde gefunden, dass für typische Fälle das Optimum der Frequenzumsetzung auf etwa 90% seines Wertes absinkt, wenn sich der Konvergenzwinkel um 30 bis 40% seines Optimalwertes ändert.

Weiterhin wurde gefunden, dass eine Verkleinerung des Konvergenzwinkels der Fundamentalwelle auf den etwa $M^2$ten Teil einen besonders vorteilhaften Wert für die zu $M^2 > 1$ gehörige Strahlung ergibt, und zwar getrennt für beide Dimensionen senkrecht zur Strahlausbreitungsrichtung.

Die erfindungsgemäße Vorrichtung zur Frequenzverdopplung von Laserstrahlung weist einen Laser, der senkrecht zur Lichtemissionsrichtung in einer Vertikalrichtung eine Vertikaldivergenz und einen dazugehörigen vertikalen Strahlgüteparameter aufweist und in einer dazu senkrechten Lateralrichtung eine Lateraldivergenz und einen dazugehörigen lateralen Strahlgüteparameter aufweist, wobei der vertikale Strahlgüteparameter und/oder der laterale Strahlgüteparameter größer als 1 ist (sind), ein nichtlineares Medium mit einer quadratischen nichtlinearen Suszeptibilität, das bei geeigneter Einstrahlrichtung eine Phasenanpassung zwischen der Grundwelle und der frequenzverdoppelten Welle durch kritische, nichtkritische Phasenanpassung oder aber durch periodische Polung ermöglicht, und eine Fokussierungsoptik auf, die den Laserstrahl in das nichtlineare Medium fokussiert, wobei durch anamorphotisch wirkende Systemanteile der Astigmatismus der Laserstrahlung vermindert wird,

wobei erfindungsgemäß die Fokussierungskonvergenz der in das Medium fokussierten Strahlung in vertikaler Richtung von der für rein kohärente Strahlung, (nämlich dass die Rayleigh-Länge der Strahltaille im nichtlinearen Medium 1/5.6 von dessen von der Grundwelle durchlaufener Länge beträgt) um einen Faktor,

der sich aus dem Strahlgüteparameter entlang der Vertikalrichtung ergibt, indem dieser Parameter um 1 verkleinert, danach mit einem vertikalen Zusatzfaktor zwischen 0.2 und 5 multipliziert und danach um 1 vergrößert wird,

verkleinert, also die Fokussierungslänge um diesen Faktor verlängert wird,

und dass die analoge Verlängerung der Fokussierungslänge in lateraler Richtung um einen Faktor, der sich aus dem Strahlgüteparameter entlang der Lateralrichtung ergibt, indem dieser Parameter um 1 verkleinert, danach mit einem lateralen Zusatzfaktor zwischen 0.2 und 5 multipliziert und danach um 1 vergrößert wird,

erfolgt bei gleicher Länge des durchstrahlten nichtlinearen Mediums.

Der Ausdruck "bei gleicher Länge des durchstrahlten nichtlinearen Mediums" bedeutet, dass die Länge des durchstrahlten nichtlinearen Mediums derart gewählt ist, dass die Ausbreitungslänge der Grundwelle durch das nichtlineare Medium das 5.2-Fache - 6.0-Fache (vorzugsweise 5.6-Fache) der Rayleigh-Entfernung dieser Grundwelle, also die Entfernung zwischen Strahltaille und der Strahlaufweitung auf das $\sqrt{2}$-Fache des Taillenradius, für den (hier nicht vorliegenden) Fall kohärenter konvergierender Laserstrahlung mit elliptischem Querschnitt beträgt und für Lateral- und Vertikaldimension eine geometrische Mittelung erfolgt.

Vorzugsweise weist der verwendete Laser einen vertikalen Strahlgüteparameter und/oder einen lateralen Strahlgüteparameter größer als 1,01, noch bevorzugter einen vertikalen Strahlgüteparameter und/oder einen lateralen Strahlgüteparameter größer als 1,1, noch bevorzugter einen vertikalen Strahlgüteparameter und/oder einen lateralen Strahlgüteparameter größer als 1,3, noch bevorzugter einen vertikalen Strahlgüteparameter und/oder einen lateralen Strahlgüteparameter größer als 2,0 auf.

Der verwendete Laser ist vorzugsweise ein Taperlaser im cw-Laserbetrieb.

Unter Vertikaldivergenz wird die Divergenz der Laserstrahlung in vertikaler Richtung verstanden. Unter Lateraldivergenz wird die Divergenz der Laserstrahlung in lateraler Richtung verstanden. Unter Fokussierungskonvergenz wird die Konvergenz der in das nichtlineare Medium fokussierten Strahlung des Lasers (jeweils in einer vertikalen bzw. lateralen Ebene) verstanden. Diese Konvergenz kann beispielsweise durch einen Winkel der Strahlausbreitungsrichtung im Vergleich zur optischen Achse (jeweils in einer vertikalen bzw. lateralen Ebene) beziffert werden.

In Formeln kann das geschrieben werden:

$$\theta_{opt\,x} = \frac{\theta_{koh\,BK\,x}}{1 + \left(M_x^2 - 1\right)Z_x} \tag{1}$$

$$\theta_{opt\,y} = \frac{\theta_{koh\,BK\,y}}{1 + \left(M_y^2 - 1\right)Z_y} \tag{2}$$

wobei $\theta_{koh\,BK\,x}$ und $\theta_{koh\,BK\,y}$ die Konvergenzwinkel entsprechend der kohärenten Boyd-Kleinman-Theorie in lateraler bzw. vertikaler Richtung, $\theta_{opt\,x}$ und $\theta_{opt\,y}$ die optimierten Konvergenzwinkel in lateraler (x) bzw. vertikaler (y) Richtung, $M_x^2$ und $M_y^2$ die Strahlgüteparameter der Grundwelle in lateraler (x) bzw. vertikaler (y) Richtung und $Z_x$ bzw. $Z_y$ die Zusatzfaktoren in lateraler (x) bzw. vertikaler (y) Richtung bedeuten, wobei $0.2 < Z_x < 5$ und $0.2 < Z_y < 5$ gelten.

Die Variabilität der oben angegebenen Zusatzfaktoren $Z_x$ und $Z_y$ ergibt die Möglichkeit, das optische System zur Fokussierung der Grundwelle so zu variieren, dass in vielen Fällen Standard-Linsen aus Katalogen verwendet werden können, wobei nicht das strenge Optimum der Umsetzungsrate erreicht wird, aber ein vertretbarer optischer Aufwand mit einer effektiven zweiten Harmonischen zusammenfällt. Für hohe Stückzahlen eines nach dieser Lehre gestalteten Moduls ist der Zusatzfaktor gleich 1 zu setzen und die Optiken exakt an die erforderlichen Konvergenzwinkel anzupassen.

Das bedeutet, dass erfindungsgemäß $0.2 < Z_x < 5$ und $0.2 < Z_y < 5$ bevorzugt $0.5 < Z_x < 2$ und $0.5 < Z_y < 2$, noch bevorzugter $0.9 < Z_x < 1.1$ und $0.9 < Z_y < 1.1$ und noch bevorzugter $Z_x = 1$ und $Z_y = 1$ gilt.

Weiterhin ist es bevorzugt, dass die Laserstrahlung eine elliptische Konvergenz derart aufweist, dass die vertikale Konvergenz sich zur lateralen Konvergenz verhält, wie der laterale Strahlgütefaktor zum vertikalen Strahlgütefaktor.

Das bedeutet, dass $\theta_{opt\,x}M_x^2 = \theta_{opt\,y}M_y^2$ gilt, also dass der durch M² vergrößerte Konvergenzwinkel kleinere kohärente Bereiche ausleuchtet, die in beiden Dimensionen einander gleich sein sollen.

Es entspricht der Erfindung, dass der Einzellaser durch einen Laserbarren oder einen Stapel von Laserbarren ersetzt werden kann. Die gesamte Strahlungsquelle kann aufgefasst werden als eine Lichtquelle mit einem einzigen Strahlgüteparameter in vertikaler Richtung und einem einzigen Strahlgüteparameter in lateraler Richtung.

Die Divergenzen genügen dann in vorteilhafter Weise den Gleichungen (1) und (2). Bei dem nichtlinearen Medium kann es sich um einen doppelbrechenden nichtlinearen optischen Kristall handeln, wobei die Fokussierungsoptik bei kritischer Phasenanpassung im doppelbrechenden nichtlinearen optischen Kristall derart ausgebildet sein kann, dass die Fokussierungskonvergenz in der Ebene der kritischen Phasenanpassung zusätzlich um einen Faktor zwischen 1.2 und 2 verkleinert ist.

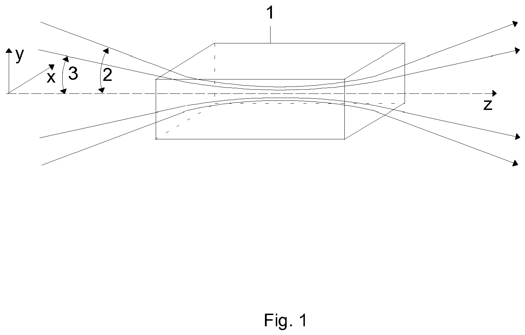

Die Erfindung soll nachfolgend anhand eines in der Figur (Figur 1) gezeigten Ausführungsbeispiels näher beschrieben werden.

Das Ausführungsbeispiel in Fig. 1 zeigt einen periodisch gepolten Lithiumniobat-Kristall 1, dessen Polung auf die Phasenanpassung zwischen der Grundwelle mit einer Wellenlänge von 0,976 μm und der zweiten Harmonischen mit einer Wellenlänge von 0,488 μm eingestellt ist. Die Länge des Kristalls längs der z-Richtung beträgt 50 mm. Die x-Achse zeigt in Richtung der lateralen Dimension des Kristalls und der lateralen Dimension des die Grundwelle emittierenden, nicht in der Abbildung enthaltenen, Halbleiterlasers (Taperlasers). Das Bezugszeichen 2 bezeichnet einen entsprechend der Boyd-Kleinman-Theorie für diesen Kristall günstigen Konvergenzwinkel von $\theta_{koh\,BK\,y}$ =0,0076 rad, der für $M_y^2 = 1$ gilt. Das Bezugszeichen 3 bezeichnet den für diesen Kristall erfindungsgemäß günstigen Konvergenzwinkel $\theta_{opt\,y}$ = 0,005 rad, wenn die vom Laser emittierte Strahlung in vertikaler Richtung einen Strahlgüteparameter von $M_y^2 = 1,49$ besitzt.

In Fig. 1 ist nur der Vertikalschnitt des einfallenden Strahls gezeigt. Analoges gilt für den Lateralschnitt entlang der x-Achse. Die entsprechenden Werte sind hierfür $\theta_{koh\,BK\,x}$ = 0,0031 rad, $M_x^2 = 3,46$ und $\theta_{opt\,x}$ =0,0009 rad. Diese Werte ergeben sich für das Optimum, d.h. Z$_x$ und Z$_y$ sind jeweils gleich 1.

Wenn die Optik nicht als Sonderfertigung erfolgen soll, sondern aus kommerziellen Bauelementen zusammengestellt werden soll, können die oben erwähnten unterschiedlichen Z$_x$ und Z$_y$-Werte zur Entspannung der Anforderungen an die Optik herangezogen werden. Das führt zu den möglichen Konvergenzbereichen $0,0022\,rad \le \theta_{opt\,y} \le 0,0069\,rad$ und $0,00023\,rad \le \theta_{opt\,x} \le 0,002\,rad$ .

**Patentansprüche**

1.  Vorrichtung zur Frequenzverdopplung von Laserstrahlung, aufweisend:

    einen Laser, dessen emittierte Strahlung die Grundwelle für die Frequenzverdoppelung bildet und senkrecht zur Lichtemissionsrichtung in einer Vertikalrichtung (y) eine Vertikaldivergenz und einen dazugehörigen vertikalen Strahlgüteparameter $\left(M_y^2\right)$ aufweist und in einer dazu senkrechten Lateralrichtung (x) eine Lateraldivergenz und einen dazugehörigen lateralen Strahlgüteparameter $\left(M_x^2\right)$ aufweist, wobei der vertikale Strahlgüteparameter $\left(M_y^2\right)$ und/oder der laterale Strahlgüteparameter $\left(M_x^2\right)$ größer als 1 ist;

    ein nichtlineares Medium (1) vorgegebener Länge mit einer quadratischen nichtlinearen Suszeptibilität, das bei geeigneter Einstrahlrichtung eine Phasenanpassung zwischen der Grundwelle und einer frequenzverdoppelten Welle ermöglicht; und
    eine Fokussierungsoptik, die den Laserstrahl in das nichtlineare Medium fokussiert,
    **dadurch gekennzeichnet, dass**
    die Fokussierungsoptik derart ausgebildet ist, dass die Fokussierungskonvergenz der in das Medium (1) fokussierten Strahlung des Lasers in vertikaler Richtung (y) einer für eine entsprechende rein kohärente Strahlung optimalen Fokussierungskonvergenz verkleinert um einen Faktor, der sich aus dem Strahlgüteparameter $\left(M_y^2\right)$ entlang der Vertikalrichtung (y) ergibt, indem dieser Strahlgüteparameter $\left(M_y^2\right)$ um 1 verkleinert, danach mit einem vertikalen Zusatzfaktor zwischen 0.2 und 5 multipliziert und danach um 1 vergrößert wird, entspricht, und
    dass die Fokussierungskonvergenz der in das Medium (1) fokussierten Strahlung des Lasers in lateraler Richtung (x) einer für eine entsprechende rein kohärente Strahlung optimalen Fokussierungskonvergenz verkleinert um einen Faktor, der sich aus dem Strahlgüteparameter $\left(M_x^2\right)$ entlang der Lateralrichtung (x) ergibt, indem dieser Strahlgüteparameter $\left(M_x^2\right)$ um 1 verkleinert, danach mit einem lateralen Zusatzfaktor zwischen 0.2 und 5 multipliziert und danach um 1 vergrößert wird, entspricht;
    wobei die Länge des durchstrahlten nichtlinearen Mediums (1) derart vorgegeben ist, dass die Ausbreitungslänge der Grundwelle durch das nichtlineare Medium (1) das 5.2-Fache - 6.0-Fache der Rayleigh-Länge einer Grundwelle für den Fall kohärenter konvergierender Laserstrahlung mit elliptischem Querschnitt beträgt und für die Vertikal- und Lateraldimension eine geometrische Mittelung erfolgt;
    wobei die optimale Fokussierungskonvergenz für rein kohärente Strahlung einer Ausbreitungslänge der Grundwelle der kohärenten Strahlung durch das nichtlineare Medium (1) entspricht, die das 5.6-Fache der Rayleigh-Länge der Strahltaille der kohärenten Strahlung im nichtlinearen Medium beträgt.

2.  Vorrichtung nach Anspruch 1,
    **dadurch gekennzeichnet, dass**

der verwendete Laser einen vertikalen Strahlgüteparameter und/oder einen lateralen Strahlgüteparameter größer als 1,01 aufweist.

3. Vorrichtung nach einem der vorhergehenden Ansprüche,
**dadurch gekennzeichnet, dass**
der verwendete Laser einen vertikalen Strahlgüteparameter und/oder einen lateralen Strahlgüteparameter größer als 1,1 aufweist.

4. Vorrichtung nach einem der vorhergehenden Ansprüche,
**dadurch gekennzeichnet, dass**
der verwendete Laser einen vertikalen Strahlgüteparameter und/oder einen lateralen Strahlgüteparameter größer als 1,3 aufweist.

5. Vorrichtung nach einem der vorhergehenden Ansprüche,
**dadurch gekennzeichnet, dass**
der verwendete Laser einen vertikalen Strahlgüteparameter und/oder einen lateralen Strahlgüteparameter größer als 2,0 aufweist.

6. Vorrichtung nach einem der vorhergehenden Ansprüche,
**dadurch gekennzeichnet, dass** sich die Vertikaldivergenz und die Lateraldivergenz voneinander unterscheiden.

7. Vorrichtung nach Anspruch 6,
**dadurch gekennzeichnet, dass**
sich die Vertikaldivergenz und die Lateraldivergenz um einen Faktor größer als 2 voneinander unterscheiden.

8. Vorrichtung nach einem der vorhergehenden Ansprüche,
**dadurch gekennzeichnet, dass**
das nichtlineare Medium (1) bei geeigneter Einstrahlrichtung eine Phasenanpassung zwischen der Grundwelle und einer frequenzverdoppelten Welle durch kritische oder nichtkritische Phasenanpassung oder durch periodische Polung ermöglicht.

9. Vorrichtung nach einem der vorhergehenden Ansprüche,
**dadurch gekennzeichnet, dass**
die Fokussierungsoptik mindestens eine anamorphotisch wirkende Fläche zur Verringerung des Astigmatismus der vom Laser emittierten Laserstrahlung aufweist.

10. Vorrichtung nach einem der vorhergehenden Ansprüche,
**dadurch gekennzeichnet, dass**
der Laser eine Laserstrahlung mit einer nach Fokussierung elliptischer Konvergenz derart emittiert, dass die vertikale Konvergenz sich zur lateralen Konvergenz verhält, wie der laterale Strahlgüteparameter zum vertikalen Strahlgüteparameter.

11. Vorrichtung nach einem der vorhergehenden Ansprüche,
**dadurch gekennzeichnet, dass**
das nichtlineare Medium (1) ein doppelbrechender nichtlinear optischer Kristall ist und die Fokussierungsoptik bei kritischer Phasenanpassung im doppelbrechenden nichtlinear optischen Kristall derart ausgebildet ist, dass die Fokussierungskonvergenz in der Ebene der kritischen Phasenanpassung zusätzlich um einen Faktor zwischen 1.2 und 2 verkleinert ist.

12. Vorrichtung nach einem der vorhergehenden Ansprüche,
**dadurch gekennzeichnet, dass**
der Laser ein Taperlaser ist.

13. Vorrichtung nach einem der vorhergehenden Ansprüche,
**dadurch gekennzeichnet, dass**
der Laser ein Laserbarren oder ein Stapel von Laserbarren ist.

**Claims**

1.  Device for doubling the frequency of laser radiation, having: a laser, whose emitted radiation forms the fundamental component for the doubling of the frequency and has a vertical divergence perpendicular to the light emission direction in a vertical direction (y) and a corresponding vertical beam quality parameter $(M_y^2)$ and has a lateral divergence in a lateral direction (x) perpendicular to it and a corresponding lateral beam quality parameter $(M_x^2)$, wherein the vertical beam quality parameter $(M_y^2)$ and/or the lateral beam quality parameter $(M_x^2)$ is greater than 1;
    a nonlinear medium (1) of predefined length with a quadratic non-linear susceptibility, which with suitable radiation direction, enables phase adjustment between the fundamental component and a wave with twice the frequency; and
    a focussing lens, which focuses the laser beam in the nonlinear medium,
    **characterised in that**
    the focussing lens is formed such that the focussing convergence of the laser radiation focussed in the medium (1) in the vertical direction (y) corresponds to an optimum focussing convergence for correspondingly pure coherent radiation reduced by a factor, which results from the beam quality parameter $(M_y^2)$ along the vertical direction (y), while this beam quality parameter $(M_y^2)$ reduced by 1, is then multiplied by a vertical additional factor between 0.2 and 5 and is then enlarged by 1, and
    that the focussing convergence of the laser radiation focussed in the medium (1) in the lateral direction (x) corresponds to an optimum focussing convergence for a correspondingly pure coherent radiation reduced by a factor, which results from the beam quality parameter $(M_x^2)$ along the lateral direction (x), while this beam quality parameter $(M_x^2)$ reduced by 1, is then multiplied by a lateral additional factor between 0.2 and 5 and is then enlarged by 1;
    wherein the length of the irradiated nonlinear medium (1) is predefined such that the propagation length of the fundamental component through the nonlinear medium (1) equals 5.2-times - 6.0-times the Rayleigh length of a fundamental component for the case of coherent converging laser radiation with elliptical cross-section and the vertical and a geometrical averaging for the lateral dimensions takes place;
    wherein the optimum focussing convergence for purely coherent radiation corresponds to a propagation length of the fundamental component of the coherent radiation through the nonlinear medium (1), which equals 5.6-times the Rayleigh length of the beam waist of the coherent radiation in the nonlinear medium.

2.  Device according to Claim 1,
    **characterised in that**
    the laser used has a vertical beam quality parameter and/or a lateral beam quality parameter greater than 1.01.

3.  Device according to any one of the preceding claims,
    **characterised in that**
    the laser used has a vertical beam quality parameter and/or a
    lateral beam quality parameter greater than 1.1.

4.  Device according to any one of the preceding claims,
    **characterised in that**
    the laser used has a vertical beam quality parameter and/or a
    lateral beam quality parameter greater than 1.3.

5.  Device according to any one of the preceding claims, **characterised in that** the laser used has a vertical beam quality parameter and/or a lateral beam quality parameter greater than 2.0.

6.  Device according to any one of the preceding claims,
    **characterised in that**

the vertical divergence and the
lateral divergence differ from each other.

**7.** Device according to Claim 6,
   **characterised in that**
   the vertical divergence and the lateral divergence differ from each other by a factor greater than 2.

**8.** Device according to any one of the preceding claims,
   **characterised in that**
   the nonlinear medium (1) with suitable radiation direction enables phase adjustment between the fundamental component and a wave with twice the frequency through critical or noncritical phase adjustment or through periodic polarity.

**9.** Device according to any one of the preceding claims,
   **characterised in that**
   the focussing lens at least has an anamorphically acting surface for reducing the astigmatism of the laser radiation emitted by the laser.

**10.** Device according to any one of the preceding claims,
   **characterised in that**
   the laser emits laser radiation with, following focussing, elliptical convergence such that the relationship of the vertical convergence to the lateral convergence is the same as that of the lateral beam quality parameter to the vertical beam quality parameter.

**11.** Device according to any one of the preceding claims,
   **characterised in that**
   the nonlinear medium (1) is a double-refracting optical crystal and the focussing lens with critical phase adjustment in the double-refracting nonlinear optical crystal is formed such that the focussing convergence in the plane of the critical phase adjustment is additionally reduced by a factor between 1.2 and 2.

**12.** Device according to any one of the preceding claims,
   **characterised in that**
   the laser is a tapered laser.

**13.** Device according to any one of the preceding claims,
   **characterised in that**
   the laser is a laser bar or a stack of laser bars.

**Revendications**

**1.** Dispositif pour le doublement de fréquence d'un rayonnement laser, comprenant :

   un laser dont le rayonnement émis forme l'onde fondamentale pour le doublement de fréquence et présente perpendiculairement à la direction d'émission lumineuse dans une direction verticale (y) une divergence verticale et un paramètre de qualité de faisceau vertical correspondant $(M\frac{2}{y})$, et dans une direction latérale (x) perpendiculaire à celle-ci une divergence latérale et un paramètre de qualité de faisceau latéral correspondant $(M\frac{2}{x})$, le paramètre de qualité de faisceau vertical $(M\frac{2}{x})$ et/ou le paramètre de qualité de faisceau latéral $(M\frac{2}{x})$ étant supérieurs à 1 ;
   un support non linéaire (1) de longueur définie avec une susceptibilité non linéaire quadratique permettant un ajustement de phase entre l'onde fondamentale et une onde à fréquence doublée en cas de direction de rayonnement appropriée ; et
   une optique de focalisation focalisant le faisceau laser dans le support non linéaire,
   **caractérisé**

**en ce que** l'optique de focalisation est prévue de sorte que la convergence de focalisation du rayonnement du laser focalisé dans le support (1) dans la direction verticale (y) corresponde à une convergence de focalisation optimale pour un rayonnement purement cohérent correspondant, diminuée d'un facteur résultant du paramètre de qualité de faisceau $\left(M\frac{2}{y}\right)$ dans la direction verticale (y), ledit paramètre de qualité de faisceau $\left(M\frac{2}{y}\right)$ étant diminué de 1, puis multiplié par un facteur additionnel vertical compris entre 0,2 et 5 et enfin augmenté de 1, et

que la convergence de focalisation du rayonnement du laser focalisé dans le support (1) dans la direction latérale (x) corresponde à une convergence de focalisation optimale pour un rayonnement purement cohérent correspondant, diminuée d'un facteur résultant du paramètre de qualité de faisceau $\left(M\frac{2}{x}\right)$ dans la direction latérale (x), ledit paramètre de qualité de faisceau $\left(M\frac{2}{x}\right)$ étant diminué de 1, puis multiplié par un facteur additionnel latéral compris entre 0,2 et 5 et enfin augmenté de 1 ;

la longueur du support non linéaire (1) irradié étant définie de sorte que la longueur de propagation de l'onde fondamentale au travers du support non linéaire (1) soit compris entre 5,2 fois et 6,0 fois la longueur de Rayleigh d'une onde fondamentale en cas de rayonnement laser cohérent convergent à section elliptique et qu'une mise à la moyenne géométrique soit effectuée pour la dimension verticale et la dimension latérale ;

la convergence de focalisation optimale pour un rayonnement purement cohérent correspondant à une longueur de propagation de l'onde fondamentale du rayonnement cohérent au travers du support non linéaire (1) égale à 5,6 fois la longueur de Rayleigh de la partie resserrée du rayonnement cohérent dans le support non linéaire.

2.  Dispositif selon la revendication 1,
    **caractérisé**
    **en ce que** le laser utilisé présente un paramètre de qualité de faisceau vertical et/ou un paramètre de qualité de faisceau latéral supérieurs à 1,01.

3.  Dispositif selon l'une quelconque des revendications précédentes,
    **caractérisé**
    **en ce que** le laser utilisé présente un paramètre de qualité de faisceau vertical et/ou un paramètre de qualité de faisceau latéral supérieurs à 1,1.

4.  Dispositif selon l'une quelconque des revendications précédentes,
    **caractérisé**
    **en ce que** le laser utilisé présente un paramètre de qualité de faisceau vertical et/ou un paramètre de qualité de faisceau latéral supérieurs à 1,3.

5.  Dispositif selon l'une quelconque des revendications précédentes,
    **caractérisé**
    **en ce que** le laser utilisé présente un paramètre de qualité de faisceau vertical et/ou un paramètre de qualité de faisceau latéral supérieurs à 2,0.

6.  Dispositif selon l'une quelconque des revendications précédentes,
    **caractérisé**
    **en ce que** la divergence verticale et la divergence latérale se distinguent l'une de l'autre.

7.  Dispositif selon la revendication 6,
    **caractérisé**
    **en ce que** la divergence verticale et la divergence latérale se distinguent l'une de l'autre d'un facteur supérieur à 2.

8.  Dispositif selon l'une quelconque des revendications précédentes,
    **caractérisé**
    **en ce qu'**en cas de direction de rayonnement appropriée, le support non linéaire (1) permet un ajustement de phase entre l'onde fondamentale et une onde à fréquence doublée par ajustement de phase critique ou non critique ou par polarisation périodique.

9.  Dispositif selon l'une quelconque des revendications précédentes,

**caractérisé**
**en ce que** l'optique de focalisation comprend au moins une surface à effet anamorphotique pour réduire l'astigmatisme du rayonnement émis par le laser.

10. Dispositif selon l'une quelconque des revendications précédentes,
**caractérisé**
**en ce que** le laser émet un rayonnement laser avec une convergence elliptique après focalisation, de sorte que la convergence verticale se comporte par rapport à la convergence latérale comme le paramètre de qualité de faisceau latéral par rapport au paramètre de qualité de faisceau vertical.

11. Dispositif selon l'une quelconque des revendications précédentes,
**caractérisé**
**en ce que** le support non linéaire (1) est un cristal optique non linéaire biréfringent et **en ce qu'**en cas d'ajustement de phase critique dans le cristal optique non linéaire biréfringent, l'optique de focalisation est prévue de sorte que la convergence de focalisation soit additionnellement diminuée d'un facteur compris entre 1,2 et 2 dans le plan de l'ajustement de phase critique.

12. Dispositif selon l'une quelconque des revendications précédentes,
**caractérisé**
**en ce que** le laser est un laser fuselé.

13. Dispositif selon l'une quelconque des revendications précédentes,
**caractérisé**
**en ce que** le laser est une barre laser ou une pile de barres laser.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **W.P. RISK ; T.R. GOSNELL ; A.V. NURMIKKO.** Compact Blue-Green Lasers. Cambridge University Press, 2003
- Optik. **BERGMANN SCHAEFER.** Lehrbuch der Experimentalphysik. vol. 3
- **H. WEBER.** Nichtlineare Optik. Walter de Gruyter, 2007, 899-998
- **R. GÜTHER.** *DGaO-Proceedings,* 2005, 44
- **H. WENZEL et al.** *Electronics Letters,* 2007, vol. 43 (3), 160-161
- **K. PASCHKE et al.** *Proceedings SPIE,* 2006, vol. 6184, 1-7
- **G.P. AGRAWAL.** *Phys. Rev.,* 1981, vol. A 23, 1863-1868
- **Z. ZAHID ; M.S. ZUBAIRY.** *Opt. Commun.,* 1990, vol. 76 (1), 1-7
- **Y. CAI ; U. PESCHEL.** *Opt. Express,* 2007, vol. 15 (23), 15480-15492
- **MAIWALD et al.** 600 mW optical output power at 488 nm by use of a high-power hybrid laser diode system and a periodically poled MgO:LiNbO3 bulk crystal. *Optical Letters Opt. Soc. America USA,* vol. 31 (6), 802-804
- **JECHOW et al.** Highly efficient single-pass frequency doubling of a continuous-wave distributed feedback laser diode usinq PPLN wavequide crystal at 488 nm. *Optical Letters Opt. Soc. America USA,* vol. 32 (20), 3035-3037
- Improvements in the diagnostics of beam quality in cw and pulsed laser systems. **CUTOLO et al.** Optics Communications. North-Holland Publishing Co, vol. 89, 223-228